(19) Europäisches Patentamt
European Patent Office
Office européen des brevets

(11) Numéro de publication: **0 216 676 B1**

(12) **FASCICULE DE BREVET EUROPEEN**

(45) Date de publication du fascicule du brevet: **18.10.89**

(51) Int. Cl.⁴: **C07F 9/165,** C10M 137/10

(21) Numéro de dépôt: **86401870.0**

(22) Date de dépôt: **25.08.86**

(54) **Dihydrocarbyl-dithiophosphyl-dithiophosphates métalliques, leur préparation et leur utilisation comme additifs pour lubrifiants.**

(30) Priorité: **04.09.85 FR 8513236**

(43) Date de publication de la demande: **01.04.87 Bulletin 87/14**

(45) Mention de la délivrance du brevet: **18.10.89 Bulletin 89/42**

(84) Etats contractants désignés: **BE DE GB IT NL**

(56) Documents cités: **DE-C- 948 156**
**US-A- 2 438 876**

(73) Titulaire: **INSTITUT FRANCAIS DU PETROLE, 4, Avenue de Bois-Préau, F-92502 Rueil-Malmaison(FR)**

(72) Inventeur: **Born, Maurice, 72, rue du Vieux Pont, F-92000 Nanterre(FR)**
Inventeur: **Lallement, Jacques, 84, 86, Boulevard Félix Faure, F-93300 Aubervilliers(FR)**
Inventeur: **Marchand, Pierre, 24 bis, rue du Docteur Maurer, F-78630 Orgeval(FR)**
Inventeur: **Parc, Guy, 27. rue du Chateau, F-92500 Rueil Malmaison(FR)**
Inventeur: **Thevenin, Nicole, 96, Boulevard Batignolles, F-75017 Paris(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



ACTORUM AG

## Description

La présente invention concerne des composés du type dihydrocarbyl-dithiophosphyl-dithiophosphates métalliques, utilisables notamment en tant qu'additifs antioxydants, antiusure, extrême pression et anticorrosifs pour les huiles lubrifiantes ; ainsi qu'un procédé pour la préparation de ces composés et les lubrifiants les contenant.

Les dialkyl- et diaryl-dithiophosphates métalliques et notamment ceux de zinc, sont très largement employés depuis de nombreuses années pour protéger les surfaces métalliques en frottement de l'usure et de la corrosion, ainsi que pour protéger les huiles lubrifiantes les contenant contre l'oxydation.

On peut trouver par exemple dans les brevets US 2.364283 - 2.364284 - 2.365938 - 2.410650 - 2.438876 - 3.190833 les détails de fabrication de tels additifs.

Les dialkyl- et dialkylaryl-dithiophosphates métalliques décrits dans l'art antérieur sont généralement caractérisés par des proportions atomiques Métal/P/S de 1/2/4 - bien que la proportion de soufre puisse être plus élevée par suite d'une sulfuration complémentaire, comme décrit par exemple dans le brevet US 2.438876. Une protection efficace contre l'usure nécessite la mise en oeuvre de ces produits dans les huiles lubrifiantes à des doses généralement comprises entre 0,5 et 1,5% en masse.

On sait par ailleurs du brevet allemand 948156 qu'il est possible d'obtenir des dérivés d'acides thiolthionophosphoriques en faisant réagir un diester d'acide thiolthionophosphorique (ou dithiophosphorique) avec de l'oxyde d'éthylène pour former un triester d'acide thiolthionophosphorique à groupe oxygéné, puis en traitant ce produit par du pentasulfure de phosphore.

Même s'il est indiqué que ces dérivés sont susceptibles de former des sels avec divers métaux (alcalins, alcalino-terreux, métaux lourds) ou avec des amines, seule la préparation d'un sel d'oléylamine est effectivement décrite.

Un objet de l'invention est de fournir de nouveaux composés du type dithiophosphates métalliques, qui apportent notamment une protection contre l'usure analogue à celle apportée par les additifs de l'art antérieur, mais à des concentrations sensiblement inférieures, ou une meilleure protection aux mêmes concentrations.

Les dihydrocarbyl-dithiophosphyl-dithiophosphates métalliques de l'invention sont des composés complexes qui peuvent être représentés par la formule générale I:

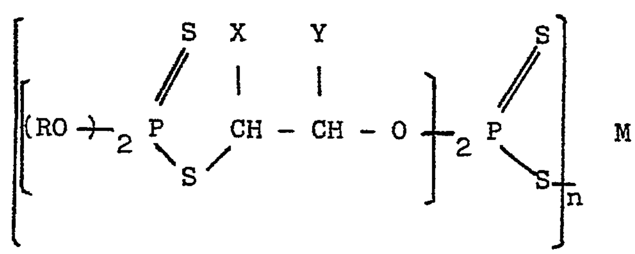

(I)

dans laquelle les radicaux R, identiques ou différents, représentent chacun un radical aliphatique, arylaliphatique, alicyclique, aromatique ou alkylaromatique monovalent renfermant de 1 à 30 atomes de carbone ou un tel radical renfermant en outre au moins un hétéroatome choisi parmi l'oxygène, l'azote, le soufre, le phosphore et les halogènes; X et Y représentent chacun un atome d'hydrogène, un groupement choisi parmi les radicaux hydrocarbonés de 1 à 30 atomes de carbone, les radicaux hydrocarbonés chlorés et les radicaux hydrocarbonés portant des groupements fonctionnels esters, X et Y pouvant en outre former ensemble une chaîne tétraméthylénique; M représente un métal choisi parmi le zinc, le cadmium, le plomb, l'antimoine ou un groupement complexe oxygéné et/ou sulfuré du molybdène (qui sera dans la suite assimilé à un métal M), le zinc étant préféré; et n est la valence du métal M considéré.

La nature des substituants X et Y est fonction du réactif époxyde

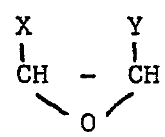

utilisé pour la synthèse des produits de l'invention comme décrit plus loin.

Plus particulièrement, X et Y peuvent représenter l'atome d'hydrogène, un groupement méthyle, chlorométhyle ou éthyle; comme indiqué plus haut, X et Y peuvent également être reliés entre eux et former une chaîne tétraméthylénique; par ailleurs, lorsque X et Y consistent en des chaînes hydrocarbonées plus longues, il peut s'agir par exemple d'octyle; enfin, concernant les chaînes hydrocarbonées portant des groupements fonctionnels esters, il peut s'agir par exemple d'octanoate d'alkyle (plus particulièrement octanoate d'octyle).

Lorsque le métal M es un métal divalent, les proportions atomiques respectives de métal, de phosphore et de soufre dans les composés de l'invention sont d'environ 1/6/12.

Les dithiophosphates métalliques de l'invention peuvent être préparés par un procédé comprenant essentiellement les étapes suivantes.

Dans une étape (a), on prépare tout d'abord un acide dithiophosphorique, dit de «première génération», par réaction entre un composé monohydroxylé (monoalcool ou monophénol, substitué ou non), et du pentasulfure de phosphore.

La réaction peut être représentée par l'équation suivante:

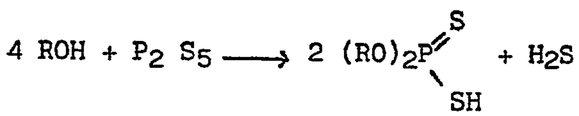

(1)

(II)

dans laquelle R est défini comme précédemment. Comme composés mono hydroxylés utilisables, on peut citer les monoalcools aliphatiques, saturés ou insaturés tels que le méthanol, éthanol, propanols, butanols, pentanols, hexanols, heptanols, octanols, nonanols, etc. ...; les mélanges de monoalcools d'origine naturelle (par exemple l'huile de fusel) ou synthétique (par exemple les alcools provenant du procédé ALFOL); les monoalcools alicycliques tels que le cyclohexanol; les halogénures de monoalcools aliphatiques, alicycliques ou aromatiques-aliphatiques tels que par exemple les chloro-2 et bromo-2 éthanols, les chloro-et bromo-propanols, butanols, pentanols, etc. ...; les alcools chloro-ou bromobenzyliques, les alcools chloro-ou bromo-phényléthyliques.

On peut également utiliser les monoalcools (poly-)oxyalkylènés, tels que par exemple les (poly-)méthoxy-, éthoxy-, propoxy-, butoxy-, phénoxy-, alkylphénoxy-éthanols et propanols, ainsi que leurs dérivés halogènés; et les composés mono hydroxylés aromatiques tels que le phénol et ses dérivés substitués.

Il doit être entendu qu'il est possible dans cette étape d'utiliser un mélange de deux ou plusieurs composés mono hydroxylés ainsi définis.

La réaction du ou des composés mono hydroxylés avec le pentasulfure de phosphore est généralement réalisée comme dans l'art antérieur, à savoir à des températures comprises entre 20 et 180°C, et de préférence entre 50 et 150°C, les réactifs étant mis en jeu dans les proportions correspondant à la stœchiométrie, ou voisines de celle-ci.

Dans une deuxième étape (b), on fait réagir le produit (II) obtenu à l'étape (a) avec un composé à fonction époxyde, tel que par exemple l'oxyde d'éthylène, de propylène, de chloropropylène, de butylène ou de cyclohexène ou encore un oxyde d'ester d'acide gras, en particulier un époxy-stéarate d'alkyle (par exemple d'octyle). On utilise de préférence les oxydes d'éthylène et de propylène.

La réaction peut être représentée par l'équation 2 ci-après :

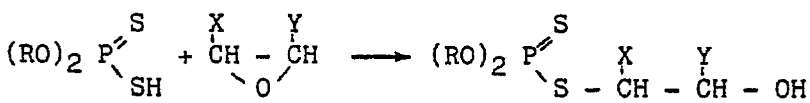

(2)

(II) (III)

dans laquelle R, X et Y sont définis comme précédemment.

Il s'agit d'une réaction de β - hydroxyalkylation du composé de formule (II), donnant naissance au composé hydroxylé de formule (III), qui est un alcool dithiophosphoré.

Cette réaction est généralement réalisée à des températures comprises entre 0 et 150°C, et de préférence entre 20 et 130°C, les réactifs étant mis en jeu dans les proportions correspondant à la stoechiométrie, ou voisines de celle-ci.

Dans une troisième étape (c), on fait réagir l'alcool dithiophosphoré (III) avec du pentasulfure de phosphore, selon un schéma réactionnel que l'on peut représenter par l'équation 3 suivante :

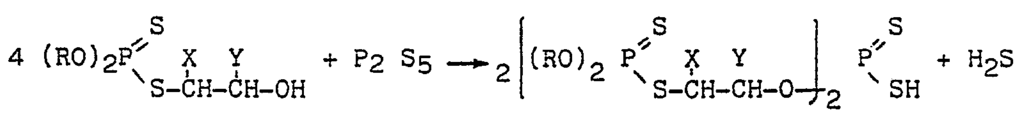

(3)

(III) (IV)

dans laquelle R, X et Y sont définis comme précédemment.

On obtient un acide dithiophosphyl dithiophosphorique, dit de "deuxième génération" (formule (IV)).

La réaction est effectuée à des températures généralement comprises entre 20 et 120°C, et de préférence entre 40 et 90°C, les quantités relatives de réactifs étant voisines de la stoechiométrie.

Dans une quatrième étape (d), on fait réagir l'acide dithiophosphorique (IV) sous forme de sel de métal alcalin ou de sel d'ammonium avec un sel du métal M désiré pour le produit final. La réaction peut être représentée par l'équation 4 suivante:

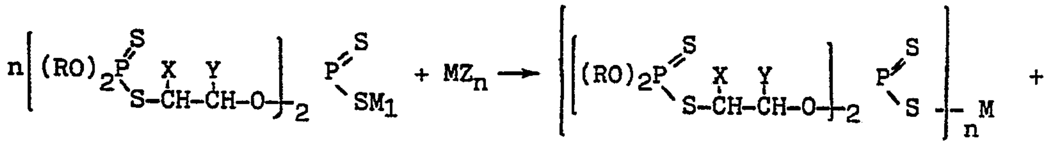

(IV) (I) + n $M_1Z$ (4)

dans laquelle R, X, Y, M et n sont définis comme précédemment.

$M_1$ est un métal alcalin ou l'ammonium, Z représente 1 équivalent del'anion du sel $MZ_n$. Ainsi, Z peut être un atome d'halogène (chlore ou brome), un groupement nitrate ou carboxylate (acétate, formiate..), ou encore un demi groupement carbonate, sulfate, etc...

On opère généralement en milieu aqueux à des températures comprises entre 0 et 100°C, et de préférence entre 40 et 60°C, le sel métallique $MZ_n$ étant utilisé en excès.

Selon un deuxième mode de synthèse des produits de l'invention, on peut faire réagir directement le produit (III) issu de l'étape (b) (alcool dithiophosphoré), avec du pentasulfure de phosphore en présence d'oxyde ou d'hydroxyde du métal M désiré pour donner le dihydrocarbyl-dithiophosphyl-dithiophosphate métallique recherché, représenté par la formule générale

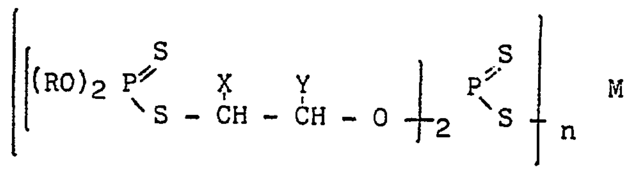

le métal M pouvant être, comme précédemment, choisi parmi le zinc, le cadmium, le plomb, l'antimoine et les groupements complexes oxygénés et/ou sulfurés du molybdène. Dans cette réaction, on forme également du sulfure d'hydrogène et de l'eau.

La réaction est réalisée généralement entre 40 et 100°C et de préférence entre 60 et 90°C en présence d'un solvant permettant d'éliminer l'eau formée, par entraînement azéotropique, le solvant préféré étant le benzène.

Les produits de l'invention, qui peuvent être décrits comme étant des dihydrocarbyl-dithiophosphyl-dithiophosphates métalliques peuvent avantageusement être utilisés comme additifs pour lubrifiants minéraux et/ou synthétiques notamment pour la protection des organes métalliques contre l'usure et la corrosion, et pour la protection des lubrifiants contre l'oxydation.

Ces additifs peuvent être utilisés à des concentrations pondérales comprises généralement entre 0,05 et 2% mais leur intérêt principal réside dans leur activité antiusure élevée, qui permet de les utiliser à des concentrations comprises entre 0,05 et 1% tout en obtenant un effet tout à fait satisfaisant.

Les exemples suivants illustrent l'invention, mais ne doivent en aucune manière être considérés comme limitatifs. L'exemple 10 est donné à titre de comparaison.

EXEMPLE 1.

Dans un réacteur de 5l muni d'un agitateur et purgé à l'azote, on introduit 2210g de butanol-2 (29,8 moles). A l'aide d'un dispositif de chauffage extérieur, la température de l'alcool est portée à 90°C environ puis, à l'aide d'un dispositif d'admission de réactifs en poudre, on introduit en deux heures dans l'alcool agité 1490g de $P_2S_5$ (6,7 moles) en maintenant la température réactionnelle entre 90 et 95°C, puis on laisse réagir 2 heures supplémentaires entre 95-100°C pour amener la complète réaction du $P_2S_5$.

Un courant d'azote est ensuite admis au sein de l'acide dialkyldithiophosphorique (de 1ère génération) pendant 0,5 heure à 95-100°C pour éliminer l'hydrogène sulfuré en solution, et l'acide est refroidi à 25-30°C. A l'aide d'une ampoule à brome reliée au réacteur, on introduit dans l'acide 810g d'oxyde de propylène (13,95 moles) en une heure, tout en maintenant la température réactionnelle entre 30 et 35°C.

Le réacteur est ensuite soumis à un vide de 2666 Pa, alors que simultanément l'alcool thiophosphoré obtenu est chauffé à 100°C ; dans ces conditions, les excès de butanol-2 et d'oxyde de propylène sont éliminés par distillation.

On refroidit, on ajoute 25 g de terre de filtration (terre de diatomées), on filtre ; on récupère ainsi 3375g d'alcool thiophosphoré.

Dans un second réacteur de 1l, muni d'un agitateur et purgé à l'azote, on introduit 240g de l'alcool thiophosphoré précédemment obtenu (0,8 mole), puis on le chauffe jusqu'à 95°C.

A l'aide d'un dispositif d'introduction de poudre, on ajoute progressivement sous agitation en 2 heures 37g (0,166) mole) de $P_2S_5$ en maintenant la température vers 95°C. On refroidit, on filtre sous atmosphère inerte en présence de terre de diatomées, et l'on récupère 209g d'acide de 2ème génération (acidité = 1,556 $10^{-3}$ équivalent acide/g).

On neutralise cet acide à l'aide d'une solution de 13g de soude dans 300 $cm^3$ d'eau. La solution laiteuse obtenue est extraite avec 3 fois 500 $cm^3$ d'hexane pour éliminer l'excès d'alcool thiophosphoré et une partie du sel de sodium de l'acide, partiellement soluble.

La solution aqueuse (inférieure), contenant le sel de sodium purifié de l'acide, est traitée pendant 3 heures sous agitation par une solution de 60g de sulfate de zinc heptahydraté Zn $SO_4$, 7 $H_2O$ (0,21 mole) dans 150 $cm^3$ d'eau).

La suspension laiteuse obtenue est extraite avec trois fois 300 $cm^3$ de benzène, les extraits benzéniques réunis sont lavés à l'eau, séchés sur sulfate de sodium anhydre, filtrés sur terre de diatomées, puis évaporés à 100°C sous pression réduite jusqu'à masse constante.

On récupère environ 90g d'un produit organique translucide très visqueux dont l'analyse élémentaire, (TABLEAU I), et les analyses RMN $^{13}C$, $^{1}H$ confirment la structure, de même que l'analyse infra-rouge, qui indique des bandes d'absorption caractéristiques des dialkyldithiophosphates de zinc, notamment à 970 cm-1 (attribuable aux groupements P-O-C issus d'alcool secondairess), à 665 cm-1 (attribuable aux groupements P = S) et à 545 cm-1 (attribuable aux groupements P-S) ; on observe que ces bandes d'absorption sont sensiblement plus intenses que celles du di-sec-butyl dithiophosphate de zinc classique correspondant, notamment pour les bandes P = S et P-S.

Le produit obtenu répond à la formule :

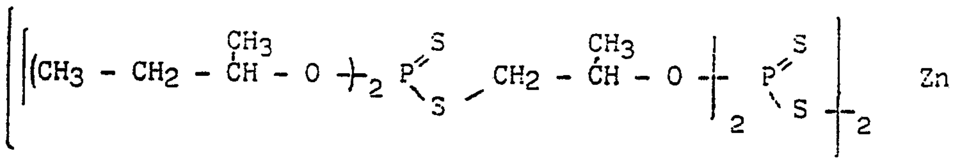

EXEMPLE 2.

L'expérimentation de l'exemple 1 est reprise en faisant réagir la solution aqueuse du sel de sodium purifié de l'acide dithiophosphorique de "2ème génération" préparé à partir de 240g de l'alcool thiophosphoré, avec 79,6g d'acétate de plomb trihydraté Pb $(OOCCH_3)_2$, $3H_2O$, dissous dans 150 $cm^3$ d'eau. Après traitements, on récupère environ 100g d'un produit organique dont l'analyse élémentaire (TABLEAU I), les analyses RMN $^{13}C$, $^{1}H$ et infra-rouge confirment la structure à savoir :

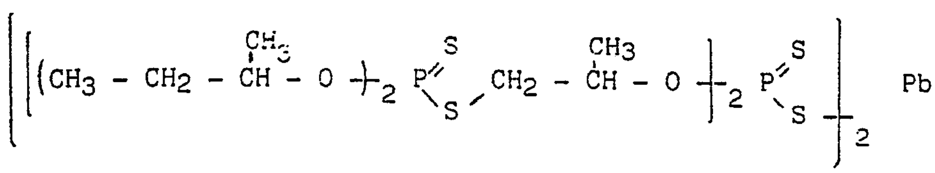

EXEMPLE 3.

L'expérimentation de l'exemple 3 est reprise en faisant réagir 56 g d'acétate de cadmium dihydraté Cd $(OOCCH_3)_2$, $2H_2O$ (0,21 mole) ; on récupère 80 g d'un produit dont l'analyse élémentaire (TABLEAU I), les analyses RMN $^{13}C$, $^{1}H$ et infra-rouge confirment la structure à savoir :

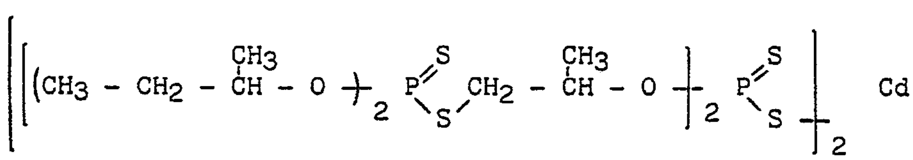

TABLEAU I

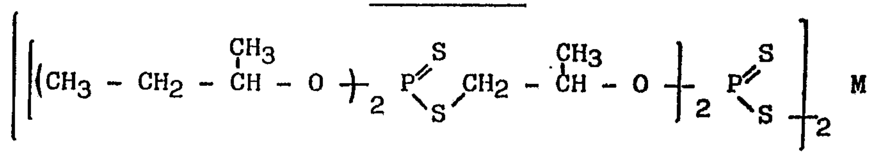

| Produit de l'exemple | Métal | % Masse | | | | | | | | | | Métal/P/S en atomes | |
|---|---|---|---|---|---|---|---|---|---|---|---|---|---|
| | | Théorie | | | | | Trouvé | | | | | | |
| | M | C | H | S | P | Métal | C | H | S* | P** | Métal*** | Théorie | Trouvé |
| 1 | Zn | 36,36 | 6,66 | 26,48 | 12,79 | 4,50 | 36,65 | 6,59 | 27,02 | 12,40 | 4,47 | 1/6/12 | 1/5,85/12,32 |
| 2 | Pb | 33,13 | 6,07 | 24,12 | 11,65 | 12,99 | 33,8 | 6,24 | 23,84 | 11,2 | 12,4 | | 1/6,04/12,42 |
| 3 | Cd | 35,22 | 6,45 | 25,65 | 12,39 | 7,49 | 35,84 | 6,65 | 25,34 | 12,2 | 7,20 | | 1/6,15/12,34 |

* dosage par la méthode LECO

** dosage par fluorescence X

*** dosage par complexométrie à l'EDTA.

EXEMPLE 4.

Dans un réacteur de 1l équipé d'un agitateur, d'un système séparateur DEAN-STARCK avec refrigérant et d'un système d'admission de réactifs en poudre, on introduit, sous atmosphère inerte, 200 g (0,66 mole) de l'alcool thiophosphoré préparé dans l'exemple 1, 300 cm³ de benzène et 20,3g (0,25 mole) de ZnO.

La suspension obtenue est chauffée sous agitation jusqu'au reflux du benzène ; la température du milieu s'établit entre 85 et 90°C.

Par l'intermédiaire du système d'introduction de réactifs en poudre, on ajoute progressivement en 3 heures 36,7g (0,165 mole) de $P_2S_5$. Il se forme un acide "de seconde génération" qui réagit avec ZnO ; l'eau issue de la réaction est éliminée, dès que formée, par entraînement hétéroazéotropique à l'aide du séparateur DEAN-STARCK. On laisse à reflux 3 heures supplémentaires, puis on laisse refroidir.

La solution benzénique est ensuite filtrée, en présence de terre de diatomées, puis évaporée à 100°C sous pression réduite jusqu'à masse constante.

On recueille ainsi 225g d'un produit visqueux dont l'analyse élémentaire (TABLEAU II), les analyses RMN ¹³C, ¹H et infra-rouge confirmant la structure, à savoir :

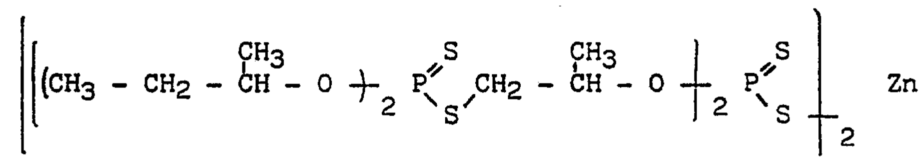

EXEMPLE 5.

L'expérimentation de l'exemple 4 est reprise en utilisant 224,4g (2,2 moles) de méthyl-4 pentanol-2, 111,1g (0,5 mole) de $P_2S_5$ ; la température de formation de l'acide de "première génération" est de 85-90°C.

Après élimination de l'$H_2S$ dissous,par barbotage d'un courant d'azote, l'acide est transformé en alcool thiophosphoré par addition, entre 30 et 35°C, et 60,9g (1,05 mole) d'oxyde de propylène. Les excès d'alcool et d'oxyde de propylène sont éliminés par chauffage à 100°C sous pression réduite.

On ajoute ensuite 400 cm³ de benzène, 25g (0,31 mole) de ZnO, puis le mélange est porté à reflux (87-90°C) sous agitation. On introduit ensuite 53,3g (0,24 mole) de $P_2S_5$ progressivement en 3 heures ; l'eau de réaction étant progressivement entraînée par effet hétéroazéotropique du solvant.

Après 3 heures de reflux supplémentaires et traitements de filtration et d'évaporation, on obtient 367g d'un produit visqueux translucide dont l'analyse élémentaire (TABLEAU II), les analyses RMN ¹³C, ¹H et infra-rouge confirment la structure, à savoir :

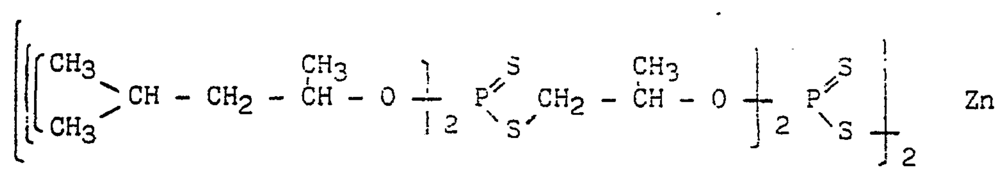

EXEMPLE 6.

L'expérimentation de l'exemple 4 est reprise en utilisant 286g (2,2 moles) d'octanol-2, 111,1g (0,5 mole) de $P_2S_5$ et 60,9g (1,05 mole) d'oxyde de propylène. La température de formation de l'acide de "première génération" est fixée entre 115 et 120°C.

Après élimination des excès de réactifs et de 1'$H_2S$ dissous, on laisse refroidir, puis on ajoute 400 cm³ de benzène, 25g (0,31 mole) de ZnO et l'on porte au reflux. On ajoute ensuite 52,7g (0,237 mole) de $P_2S_5$ en 3 heures, puis on laisse réagir 4 heures supplémentaires, l'eau de réaction étant continuellement éliminée.

Après refroidissement, filtration sur terre de diatomées, évaporation sous pression réduite, on récupère 432g d'un produit visqueux translucide dont l'analyse élémentaire (TABLEAU II), les analyses RMN ¹³C, ¹H et infra-rouge confirment la structure, à savoir :

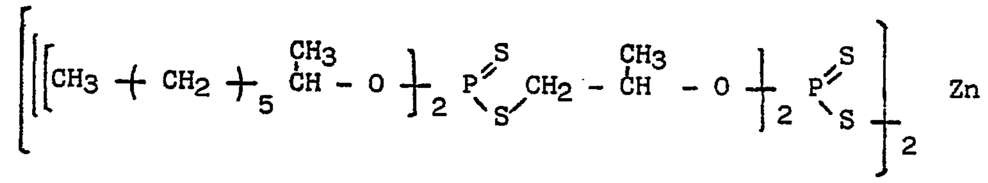

EXEMPLE 7.

L'expérimentation de l'exemple 5 est reprise en utilisant 262,44g (1 mole) de dodécylphénol, 52,78g (0,2375 mole) de $P_2S_5$ ; la température de formation de l'acide dithiophosphorique de "première génération" est de 145-155°C.

Après élimination de l'$H_2S$ dissous, par barbotage d'azote, l'acide est transformé en alcool thiophosphoré par addition, entre 30 et 35°C, de 28,93g (0,5 mole) d'oxyde de propylène. L'excès d'oxyde de propylène est éliminé par chauffage à 100°C sous pression réduite.

On ajoute ensuite au mélange 400 $cm^3$ de benzène, 38,7g de ZnO (0,475 mole), puis le mélange est porté au reflux.

On introduit ensuite 7,23g de $P_2S_5$ (0,119 mole) progressivement en 3 heures ; l'eau de réaction étant continuellement éliminée par entraînement hétéroazéotropique.

Après 3 heures de reflux supplémentaires et traitements de filtration sur terre de diatomées et d'evaporation sous pression réduite, on récupère 332g d'un produit dont l'analyse élémentaire (TABLEAU II), les analyses RMN $^{13}C$, $^1H$ et infra-rouge confirment la structure, à savoir :

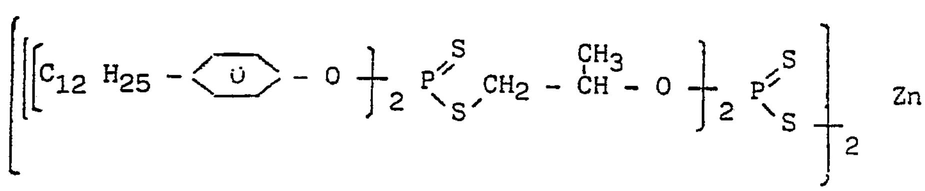

EXEMPLE 8.

L'expérimentation de l'exemple 4 est reprise en utilisant un mélange de 81,4g (1,1 mole) de n-butanol et de 143g (1,1 mole ) d'octanol-2, 111,1g (0,5 mole) de $P_2S_5$, 60,9g (1,05 mole) d'oxyde de propylène et 25 g (0,31 mole) de ZnO ; la température de formation de l'acide de "première génération" est fixée à 115 °C. La préparation du produit visé est poursuivie dans les conditions de l'exemple 6.

On récupère 325g d'un produit visqueux translucide dont l'analyse élémentaire (TABLEAU II), les analyses RMN $^{13}C$, $^1H$ et infra-rouge confirment la structure, à savoir :

10

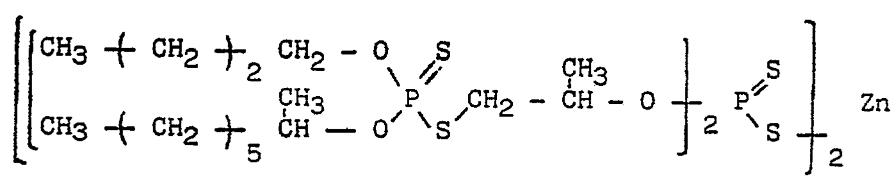

Cette formule étant une formule globale représentative d'un mélange de produits renfermant des proportions analogues de groupements dérivés du n-butanol et de l'octanol-2.

TABLEAU II.

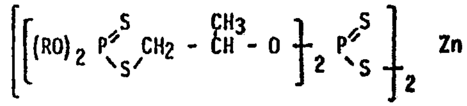

| Produit de l'exemple | RO- | % Masse | | | | | | | | | | Zn/P/S en atomes | |
|---|---|---|---|---|---|---|---|---|---|---|---|---|---|
| | | Théorie | | | | | Trouvé | | | | | | |
| | | C | H | S | P | Zn | C | H | S | P | Zn | Théorie | Trouvé |
| 4 | $CH_3-CH_2-CH(CH_3)-O-$ | 36,36 | 6,66 | 26,48 | 12,79 | 4,50 | 36,71 | 6,92 | 26,8 | 12,20 | 4,30 | 1/6/12 | 1/6/12,7 |
| 5 | $CH_3-CH(CH_3)-CH_2-CH(CH_3)-O-$ | 42,96 | 7,69 | 22,94 | 11,08 | 3,90 | 43,15 | 8,10 | 23,5 | 10,74 | 3,76 | 1/6/12 | 1/5,82/12,7 |
| 6 | $CH_3-(CH_2)_5-CH(CH_3)-O-$ | 47,99 | 8,48 | 20,23 | 9,77 | 3,44 | 48,5 | 8,62 | 19,62 | 9,40 | 3,20 | 1/6/12 | 1/6,2/12,5 |
| 7 | $C_{12}H_{25}$ 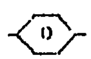 $O-$ | 63,31 | 8,72 | 13,00 | 6,28 | 2,21 | 64,1 | 8,70 | 12,30 | 6,10 | 2,17 | 1/6/12 | 1/5,93/11,5 |
| 8 | $CH_3-(CH_2)_2-CH_2-O-$ (50%)<br>$CH_3-(CH_2)_5-CH(CH_3)-O-$ (50%) | 42,96 | 7,69 | 22,94 | 11,08 | 3,90 | 43,27 | 7,98 | 23,3 | 10,89 | 3,82 | 1/6/12 | 1/6,02/12,43 |

EXEMPLE 9.

L'expérimentation de l'exemple 7 est reprise en substituant l'oxyde de propylène par la même quantité molaire d'oxyde d'éthylène. On recueille en fin d'expérimentation 314g d'un produit dont l'analyse élémentaire est la suivante :

| Elément | % Masse | |
|---|---|---|
| | Théorie | Trouvé |
| C | 62,88 | 64,31 |
| H | 8,61 | 8,70 |
| S | 13,25 | 13,4 |
| P | 6,40 | 6,1 |
| Zn | 2,25 | 2,28 |
| Zn/P/S en atomes | 1/6/12 | 1/5,64/12 |

Par ailleurs, les analyses RMN $^{13}C$, $^{1}H$ et infra-rouge confirment la structure, à savoir :

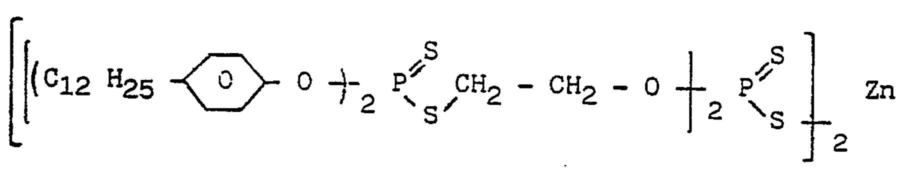

EXEMPLE 10 (comparatif)

On a également préparé un sel d'amine correspondant à l'enseignement du brevet allemand 948156, comme suit :

Dans un réacteur de 0,51, on prépare 100g d'un acide de "deuxième génération" (acidité = 1,556 $10^{-3}$ eq. acide/g) selon la méthode décrite dans l'exemple 1.

On ajoute 41,6g d'oléylamine, c'est-à-dire la quantité stoechiométrique nécessaire à la neutralisation de l'acide. Après réaction exothermique, le mélange est chauffé pendant 3 heures pour parfaire la réaction.

Après filtration, on récupère 127g d'un produit dont l'analyse élémentaire révèle les teneurs suivantes en P, S et N.

| | Trouvé | Théorie |
|---|---|---|
| P% masse | 9,25 | 9,66 |
| S% masse | 20,52 | 20,00 |
| N% masse | 1,45 | 1,46 |

qui confirment la structure de sel d'oléylamine, que l'on peut représenter par la formule :

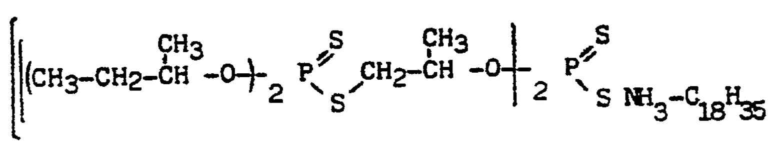

EXEMPLE 11 : TESTS

Les propriétés antiusure des additifs dont la préparation est décrite dans les exemples précédents ont été mises en évidence au moyen d'un moteur PEUGEOT XL5 à arbre à cames en tête.

Le montage utilisé pour les essais est constitué de deux culasses de moteur PEUGEOT XL5, montées sur des supports permettant la circulation de l'huile dans le système. Les arbres à cames sont entraînés directement en bout par des moteurs électriques à deux vitesses. Un système de pompe à huile de reconstituer les conditions normales d'un moteur complet, ainsi que la mise en pression du circuit avant la mise en mouvement des arbres à cames. Une filtration fine (sensiblement 10µm) permet d'éliminer la plupart des particules formées lors du frottement.

Les principales conditions d'essai sont les suivantes :

- vitesse de rotation : 1 minute à 750 tr/min
  2 minutes à 1500 tr/min
- durée : 50 heures
- température d'huile : 50°C
- pression d'alimentation des culbuteurs : 2 bars à 50°C
- charge des ressorts sous la levée maximale : 1200 N
- réglage intermédiaire des jeux à 25 heures
- mise sous pression et en température des arbres à cames avant le démarrage des moteurs d'entraînement.

Les propriétés antiusure des additifs sont évaluées en faisant la moyenne de l'usure des culbuteurs après essai (soit l'usure moyenne des 16 culbuteurs).

L'huile lubrifiante utilisée est constituée d'une huile minérale 175 Neutral solvent contenant :

3,35% en masse d'additif détergent (Ca = 1800 ppm)

5 % en masse d'additif dispersant sans cendres.

Trois séries d'expérimentations sont réalisées, l'une au moyen du dithiophosphate de zinc de l'exemple 1 (Zn/P/S = 1/5,85/12,32), une seconde au moyen du sel d'oléylamine de l'exemple 10 et une troisième au moyen du dithiophosphate de zinc classique obtenu à partir du butanol-2 (Zn/P/S = 1/2/4) ; les résultats obtenus sont rassemblés dans le tableau III ci-après :

TABLEAU III

| ADDITIF | | | | * |
|---|---|---|---|---|
| Nature | Additif dans l'huile (% masse) | Zn dans l'huile (ppm) | P dans l'huile (ppm) | usure moyenne des culbuteurs mg/culbuteur |
| Sans | 0 | 0 | 0 | * * |
| 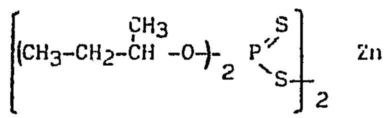 classique | 1,174<br>0,782<br>0,391<br>0,293 | 1400<br>933<br>466<br>350 | 1326<br>884<br>442<br>331 | 14,7<br>15,6<br>17,0<br>26,2 |
| 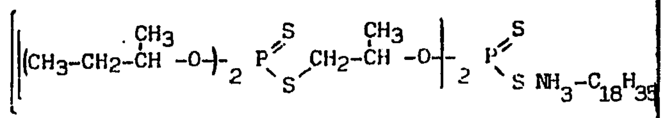 de l'exemple 10 | 1,433<br>0,956 | 0<br>0 | 1326<br>884 | 23,7<br>28,0 |
| 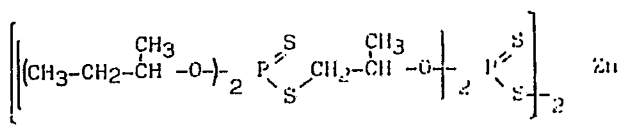 de l'exemple 1 | 1,069<br>0,713<br>0,260<br>0,130 | 478<br>319<br>116<br>58 | 1326<br>884<br>322<br>161 | 12,9<br>13,5<br>13,2<br>14,1 |

* usure moyenne calculée sur 16 culbuteurs (8 par culasse)

** destruction des culbuteurs après quelques heures d'essai.

L'examen du tableau III met en évidence une activité anti-usure plus élevée pour l'un des additifs de l'invention que pour le dithiophosphate de zinc classique obtenu à partir du même alcool initial et que pour le produit de réaction de l'oléylamine sur l'acide dithiophosphorique de seconde génération.

On observe en effet, pour le dithiophosphate commercial, et pour le dithiophosphate d'amine que la protection des culbuteurs contre l'usure diminue constamment lorsque la teneur en phosphore du lubrifiant décroît, notamment en dessous d'environ 1500 ppm de phosphore, alors qu'au contraire avec l'un des produits de l'invention, cette protection est assurée même à des teneurs en phosphore aussi faibles qu'environ 160 ppm.

Les mêmes expérimentations, réalisées à partir de quantités molaires identiques d'additifs des exemples de 2 à 9 conduisent à des résultats analogues.

**Revendications**

1. Composé du type dihydrocarbyl-dithiophosphyl-dithiophosphate métallique, représenté par la formule générale:

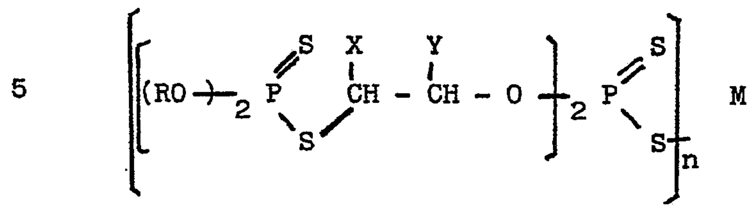

dans laquelle les radicaux R, identiques ou différents, représentent chacun un radical aliphatique, arylaliphatique, alicyclique, aromatique ou alkylaromatique monovalent renfermant de 1 à 30 atomes de carbone ou un tel radical renfermant en outre au moins un hétéroatome choisi parmi l'oxygène, l'azote, le soufre, le phosphore et les halogènes; X et Y représentent chacun un atome d'hydrogène, un groupement choisi parmi les radicaux hydrocarbonés de 1 à 30 atomes de carbone, les radicaux hydrocarbonés chlorés et les radicaux hydrocarbonés portant des groupements fonctionnels esters, X et Y pouvant en outre former ensemble une chaîne tétraméthylénique; M représente un métal choisi parmi le zinc, le cadmium, le plomb et l'antimoine ou un groupement complexe oxygéné et/ou sulfuré du molybdène; et n est la valence du métal considéré.

2. Composé selon la revendication 1, caractérisé en ce que X et Y représentent chacun un atome d'hydrogène, un groupement méthyle, chlorométhyle ou éthyle, octyle ou octanoate d'alkyle, ou forment ensemble une chaîne tétraméthylénique.

3. Composé selon l'une des revendications 1 et 2, caractérisé en ce que M représente le zinc.

4. Composé selon l'une des revendications 1 à 3, caractérisé en ce que le métal M est à l'état divalent et les proportions atomiques dudit métal M, du phosphore et du soufre dans ledit composé sont d'environ 1/6/12.

5. Procédé de préparation d'un composé selon l'une des revendications 1 à 4, caractérisé en ce qu'il comprend:

une étape (a), dans laquelle on fait réagir un composé monohydroxylé ROH et du pentasulfure de phosphore pour former un acide dithiophosphorique répondant à la formule

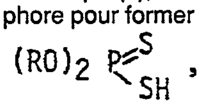 , R étant défini comme dans la revendication 1;

une étape (b), dans laquelle on fait réagir l'acide dithiophosphorique obtenu à l'étape (a) avec un composé à fonction époxyde

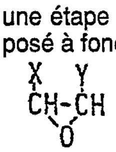

pour former un alcool dithiophosphoré répondant à la formule

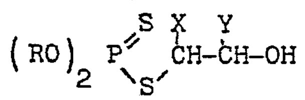 ,

X et Y étant définis comme dans la revendication 1;

une étape (c), dans laquelle on fait réagir l'alcool dithiophosphoré obtenu à l'étape (b) avec du pentasulfure de phosphore pour former un acide dithiophosphyl-dithiophosphorique de formule

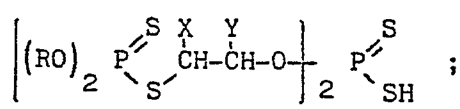 ;

et une étape (d), dans laquelle on fait réagir l'acide dithiophosphyl-dithiophosphorique obtenu à l'étape (c), sous forme de sel de métal alcalin ou d'ammonium, avec un sel de métal M, pour former le composé recherché, de formule

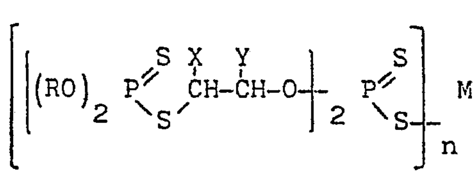

6. Procédé de préparation d'un composé selon l'une des revendications 1 à 4, caractérisé en ce qu'il comprend:

– une étape (a), dans laquelle on fait réagir un composé mono-hydroxylé ROH et du pentasulfure de phosphore pour former un acide dithiophosphorique répondant à la formule

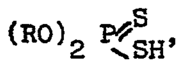 R étant défini comme dans la revendication 1;

– une étape (b), dans laquelle on fait réagir l'acide dithiophosphorique obtenu à l'étape (a) avec un composé à fonction époxyde

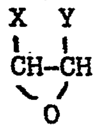 pour former un alcool dithiophosphoré répondant à la formule

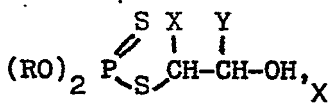 X et Y étant définis comme dans la revendication 1;

– et une étape (c), dans laquelle on fait réagir l'alcool dithiophosphoré obtenu à l'étape (b) avec du pentasulfure de phosphore en présence d'oxyde ou d'hydroxyde dudit métal M pour former le composé recherché.

7. Procédé selon la revendication 6, caractérisé en ce que l'étape (c) est effectuée en présence d'un solvant permettant d'éliminer l'eau formée, par entraînement azéotropique.

8. Utilisation d'un composé selon l'une des revendications 1 à 4 comme aditif pour huile lubrifiante minérale ou synthétique dans laquelle ledit composé est utilisé à une concentration de 0,05 à 2% en poids.

9. Utilisation selon la revendication 8, dans laquelle ledit composé est utilisé à une concentration de 0,05 à 1% en poids.

## Patentansprüche

1. Verbindungen vom Typ Metalldihydrocarbyl-Dithiophosphyl-Dithiophosphat der allgemeinen Formel

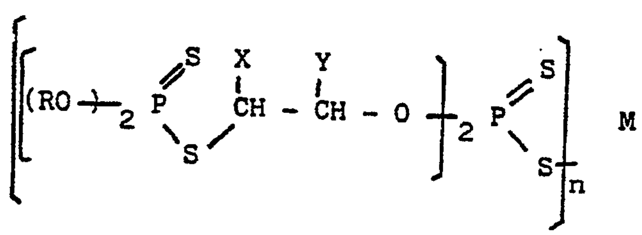

worin die Reste R, die gleich oder verschieden sein können, jeweils einen aliphatischen, araliphatischen, alicyclischen, aromatischen oder alkylaromatischen einwertigen Rest mit 1 bis 30 Kohlenstoffatomen bedeuten oder einen solchen Rest, der außerdem zumindest ein Heteroatom aus der Gruppe Sauerstoff, Stickstoff, Schwefel, Phosphor und Halogene aufweisen kann; X und Y jeweils ein Wasserstoffatom oder eine Gruppe ausgewählt aus Kohlenwasserstoffresten mit 1 bis 30 Kohlenstoffatomen, chlorierten Kohlenwasserstoffresten und Kohlenwasserstoffresten, welche funktionelle Estergruppen enthalten, bedeuten, wobei X und Y außerdem zusammen eine Tetramethylenkette bilden können; M ein Metall aus der Gruppe Zink, Cadmium, Blei und Antimon darstellt oder einen sauerstoffhaltigen und/oder schwefelhaltigen Komplex von Molybdän; und n die Wertigkeit des in Betracht gezogenen Metalls bedeutet.

2. Verbindung nach Anspruch 1, dadurch gekennzeichnet, daß X und Y jeweils ein Wasserstoffatom, eine Methyl-, Chlormethyl- oder Ethylgruppe, Octyl oder Alkyloctanoat bedeuten oder zusammen eine Tetramethylenkette bilden.

3. Verbindung nach einem der Ansprüche 1 und 2, dadurch gekennzeichnet, daß M Zink darstellt.

4. Verbindung nach einem der Ansprüche 1 bis 3, dadurch gekennzeichnet, daß das Metall M sich im zweiwertigen Zustand befindet und die Atomverhältnisse dieses Metalls M, von Phosphor und von Schwefel in dieser Verbindung etwa 1:6:12 betragen.

5. Verfahren zur Herstellung einer Verbindung nach einem der Ansprüche 1 bis 4, dadurch gekennzeichnet, daß es umfaßt:

– eine Stufe (a), worin man eine Monohydroxylverbindung ROH und Phosphorpentasulfid unter Bildung eines Dithiophosphorsäure-0,0-diesters der Formel

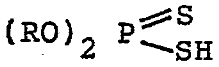 reagieren läßt, wobei R die in Anspruch 1 angegebene Bedeutung besitzt;

– eine Stufe (b), worin man den in Stufe (a) erhaltenen Dithiophosphorsäurediester mit einer Verbin-

dung mit Epoxidfunktion

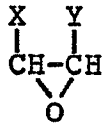

reagieren läßt unter Bildung eines Dithiophosphorsäure-0,0-di(2-hydroxyethyl)esters der Formel

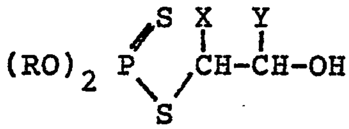 ,

worin X und Y die in Anspruch 1 angegebenen Bedeutungen besitzen;

– eine Stufe (c), worin man den in Stufe (b) erhaltenen Dithiophosphorsäure-0,0-di(2-hydroxyethyl)ester mit Phosphorpentalsulfid reagieren läßt unter Bildung einer 0,0-Bis[2-(0,0-di-ester-thiophosporylthio)ethyl]-dithiophosphorsäure der Formel

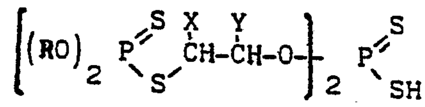 ;

und eine Stufe (d), worin man die Stufe (c) erhaltene 0,0-Bis[2-0,0-di-ester-thiophosphorylthio)ethyl]-dithiophosphorsäure in Form des Alkali- oder Ammoniumsalzes mit einem Salz des Metalls M reagieren läßt unter Bildung der gesuchten Verbindung der Formel

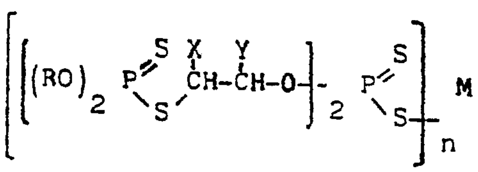

6. Verfahren zur Herstellung der Verbindung nach einem der Ansprüche 1 bis 4, dadurch gekennzeichnet, daß es umfaßt:

– eine Stufe (a), worin man eine Monohydroxylverbindung ROH und Phosphorpentasulfid unter Bildung eines Dithiophosphorsäure-0,0-diesters der Formel

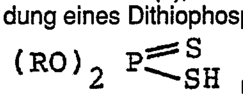 reagieren läßt, worin R die in Anspruch 1 angegebene Bedeutung hat;

– eine Stufe (b), worin man den in Stufe (a) erhaltenen Dithiophosphoräsurediester mit einer Verbindung mit Epoxidfunktion

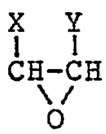

unter Bildung eines Dithiophosphorsäure-0,0-di(2-hydroxyethyl)esters der Formel

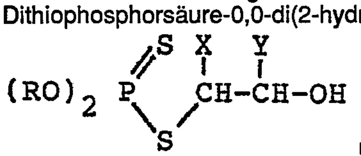

umsetzt, worin X und Y die in Anspruch 1 angegebenen Bedeutungen besitzen;

– eine Stufe (c), worin man den in Stufe (b) erhaltenen Dithiophosphorsäure-0,0-di(2-hydroxyethyl)ester mit Phosphorpentasulfid in Gegenwart eines Oxids oder eines Hydroxids dieses Metalls M unter Bildung der gesuchten Verbindung umsetzt.

7. Verfahren nach Anspruch 6, dadurch gekennzeichnet, daß die Stufe (c) in Gegenwart eines Lösungsmittels durchgeführt wird, welches die Beseitung des gebildeten Wassers durch azeotropes Abschleppen ermöglicht.

8. Verwendung einer Verbindung nach einem der Ansprüche 1 bis 4 als Zusatz für mineralische oder synthetische Schmieröle, wobei diese Verbindung in einer Konzentration von 0,05 bis 2 Gew.-% eingesetzt wird.

9. Verwendung nach Anspruch 8, wobei diese Verbindung in einer Konzentration von 0,05 bis 1 Gew.-% eingesetzt wird.

## Claims

1. A compound of the metal dihydrocarbyl-dithiophosphyl-dithiophosphate type, represented by the general formula:

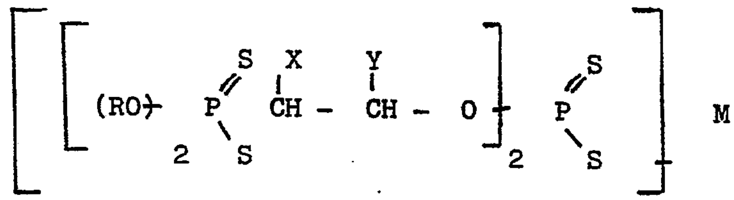

in which the radicals R, identical or different, represent each a monovalent aliphatic, arylalyphatic, alicyclic, aromatic or alkylaromatic radical containing from 1 to 30 carbon atoms or such a radical further containing at least one heteroatom selected from oxygen, nitrogen, sulfur, phosphorus and halogens; X and Y represent each a hydrogen atom, a group selected from the hydrocarbon radicals of 1 to 30 carbon atoms, the chlorinated hydrocarbon radicals and the hydrocarbon radicals bearing ester functional groups; wherein X and Y may further form together a tetramethylene chain; M represents a metal selected from zinc, cadmium, lead and antimony or an oxygen-and/or sulfur-containing molybdenum complex group; and n is the valence of the metal considered.

2. A compound according to claim 1, characterized in that X and Y represent each a hydrogen atom, a methyl, chloromethyl, ethyl, octyl, or alkyl octanoate group, or form together a tetramethylene chain.

3. A compound according to one of claims 1 and 2, characterized in that M represents zinc.

4. A compound according to one of claims 1 to 3, characterized in that metal M is in the divalent state and the atomic proportions of said metal M, phosphorus and sulfur in said compound are about 1/6/12.

5. A process for manufacturing a compund according to one of claims 1 to 4, characterized in that it comprises the steps of:

(a) reacting a monohydroxy compound ROH and phosphorus pentasulfide to form a dithiophosphoric acid complying with the formula

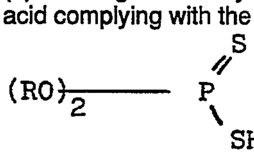

, R being defined as in claim 1;

(b) reacting the dithiophosphoric acid obtained in step (a) with a compound having an epoxy group

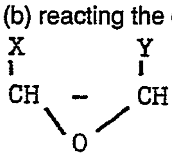

to form a dithiophosphorus alcohol complying with the formula

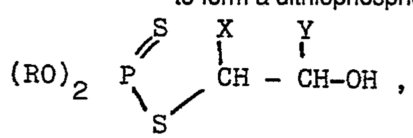

X and Y being defined as in claim 1;

(c) reacting the dithiophosphorus alcohol obtained in step (b) with phosphorus pentasulfide to form a dithiophosphyl-dithiophosphoric acid of formula:

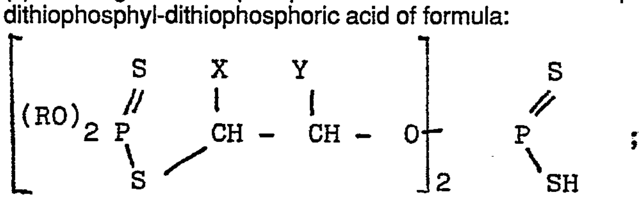

and

(d) reacting the dithiophosphyl-dithiophosphoric acid obtained in step (c) as salt of alkali metal or of ammonium, with a salt of metal M, to form the desired compound of formula:

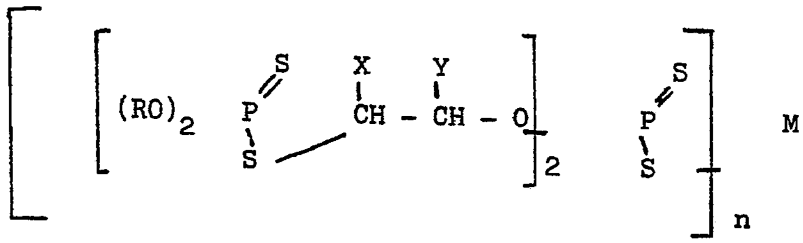

6. A process for manufacturing a compound according to one of claims 1 to 4, characterized in that it comprises the step of:

(a) reacting a monohydroxy compound ROH and phosphorus pentasulfide to form a dithiophosphoric acid complying with the formula:

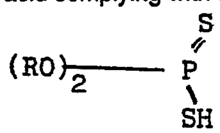 ,

R being defined as in claim 1;

(b) reacting the dithiophosphoric acid obtained in step (a) with a compound having an epoxy group

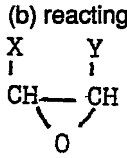

to form a dithiophosphorus alcohol of the formula:

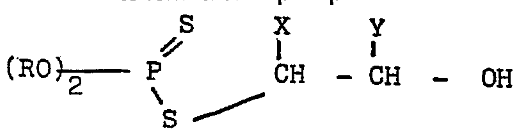 ,

X and Y being defined as in claim 1; and

(c) reacting the dithiophosphorus alcohol obtained in step (b) with phosphorus pentasulfide in the presence of an oxide or hydroxide of said metal M, to form the desired compound.

7. A process according to claim 6, characterized in that step (c) is performed in the presence of a solvent adapted to remove the water formed, by azeotropic stripping.

8. The use of a compound according to one of claims 1 to 4 as an additive for mineral or synthetic lubricating oil in which said compound is used at a concentration of 0.05 to 2% by weight.

9. The use according to claim 8, in which said compound is used at a concentration of 0.05 to 1% by weight.